# FASCICULE DE BREVET EUROPEEN

(11) **EP 1 031 786 B1**
(45) Date de publication et mention de la délivrance du brevet: **28.03.2007**
(21) Numéro de dépôt: 00400123.6
(22) Date de dépôt: 18.01.2000
(51) Int. Cl.: F21V 14/04, B60Q 1/068, F21W 101/10

(54) **Projecteur de véhicule capable d'émettre deux faisceaux lumineux différents avec une source unique**
Kraftfahrzeug-Scheinwerfer zur Erzeugung von zwei verschiedenen Lichtstrahlen mit einer einzigen Lichtquelle
Vehicle headlamp emitting two different light beams with a single light source

(30) Priorité: 22.02.1999 FR 9902161
(43) Date de publication de la demande: 30.08.2000
(73) Titulaire: VALEO VISION, 93012 Bobigny Cédex (FR)
(72) Inventeur: Ravier, Jean Paul, 94100 Saint Maur (FR); Montenegro, Cesar Lopez, 93012 Bobigny Cédex (FR)
(74) Mandataire: Lemaire, Marc

(56) Documents cités:
- EP-A- 0 791 780
- FR-A- 2 276 195
- FR-A- 2 432 405
- FR-A- 2 765 308

## Description

La présente invention concerne d'une manière générale le domaine des projecteurs de véhicule et plus particulièrement ceux capables d'émettre, avec une source lumineuse unique, deux faisceaux lumineux différents, grâce au mouvement d'un réflecteur par rapport à la source lumineuse.

On connaît déjà dans la technique antérieure des projecteurs de ce type. Le document FR 2 765 308, par exemple, décrit un projecteur dans lequel le réflecteur est déplacé par rapport à la source lumineuse, entre deux positions, d'une part en effectuant une translation du réflecteur dans la direction globale d'éclairage du projecteur et d'autre part en commandant un dispositif de réglage de manière à effectuer un léger relèvement de la lumière émise, par basculement du support de la source lumineuse.

Ce type de projecteur comprend des pièces qui, par leur nombre, leur encombrement et leur débattement, le rendent inadapté aux véhicules de gammes moyenne et basse, dans lesquels les volumes disponibles dans le compartiment moteur sont de plus en plus réduit.

La présente invention vise à pallier cet inconvénient de la technique antérieure. Elle propose à cet effet un projecteur de véhicule muni d'une came pour déplacer un réflecteur et une source lumineuse l'un par rapport à l'autre, pour engendrer deux faisceaux lumineux différents, cette came comportant une première et une deuxième pièce et transformant un mouvement de rotation de la première pièce autour d'un axe de rotation, en un premier mouvement de translation de la deuxième pièce, caractérisé par le fait que le premier mouvement de translation est réalisé colinéairement à l'axe de rotation.

Ainsi, le fait que le premier mouvement de translation est effectué colinéairement à l'axe de rotation, favorise une réduction du nombre, de l'encombrement et du débattement des pièces du mécanisme de déplacement du réflecteur et de la source lumineuse l'un par rapport à l'autre, en comparaison de ce qu'il était dans les projecteurs de l'art antérieur.

La réduction du nombre de pièces par rapport aux dispositifs de l'art antérieur capables d'émettre, avec une source lumineuse unique, deux faisceaux différents, permet de minimiser les risque de non maîtrise industrielle liés au fait qu'un nombre de pièces élevé et que les chaînes de cotes qui en résultent, nécessitent des procédés de production qui sont aux limites des performances accessibles actuellement.

Ceci rend donc le projecteur selon l'invention plus facilement industrialisable et plus facile à standardiser. En effet, on peut fabriquer un support de lampe et un système de came, uniques pour tous les projecteurs de tous les types de véhicules, ce qui permet d'abaisser le coût de la fonction éclairage faisceau de route/faisceau de croisement.

Avantageusement, les première et deuxième pièces sont aptes à un deuxième mouvement de translation, l'une par rapport à l'autre, dans un plan perpendiculaire à l'axe de rotation.

Cette caractéristique permet d'obtenir avec un nombre réduit de pièces un positionnement plus précis du réflecteur par rapport à la source lumineuse, principalement dans la position faisceau de croisement.

Avantageusement encore, le projecteur comporte un micromoteur alimenté et commandé par les tensions disponibles sur les faisceaux électriques pour les éclairages de croisement et de route du véhicule.

Ceci permet de ne pas avoir à modifier le câblage utilisé pour les projecteurs conventionnels.

Avantageusement, la première pièce, au cours de sa rotation par rapport à la deuxième pièce, est apte à pousser la deuxième pièce parallèlement à l'axe de rotation.

Avantageusement encore, au moins l'une des première et deuxième pièces est munie d'une rampe présentant une surface s'écartant d'un plan perpendiculaire à l'axe de rotation, selon une trajectoire décrivant un arc de cercle autour de cet axe.

Avantageusement aussi, les première et deuxième pièces comportent un passage pour une lampe ou un support de lampe.

Avantageusement, lorsque le projecteur conforme à la présente invention est monté sur un véhicule, le premier mouvement de translation s'effectue selon un axe horizontal et le deuxième mouvement de translation s'effectue selon un axe vertical.

D'autres aspects, avantages et buts de l'invention apparaîtront à la lecture de la description détaillée qui suit.

L'invention sera aussi mieux comprise à l'aide des références aux dessins sur lesquels :
- la figure 1 est une représentation schématique en coupe médiane selon un plan vertical parallèle à la direction d'éclairage, d'un projecteur conforme à la présente invention ;
- la figure 2 est une représentation schématique en coupe médiane selon un plan vertical parallèle à la direction d'éclairage, d'un exemple de mécanisme de déplacement du miroir du projecteur représenté sur la figure 1, celui-ci étant dans une première configuration ;
- la figure 3 est une représentation analogue à celle de la figure 2, le mécanisme de déplacement du miroir étant dans une deuxième configuration ;
- la figure 4 est une représentation schématique de pièces du mécanisme représenté sur les figures 2 et 3, vu parallèlement à la direction d'éclairage ;
- la figure 5 est une vue en perspective d'un exemple de projecteur conforme à l'invention ;
- la figure 6 est une vue en perspective éclatée du projecteur représenté sur la figure 5 ; et
- la figure 7 représente en semi-transparence et en coupe perpendiculairement à la direction d'éclairage, une platine et un micromoteur équipant le projecteur représenté aux figures 5 et 6.

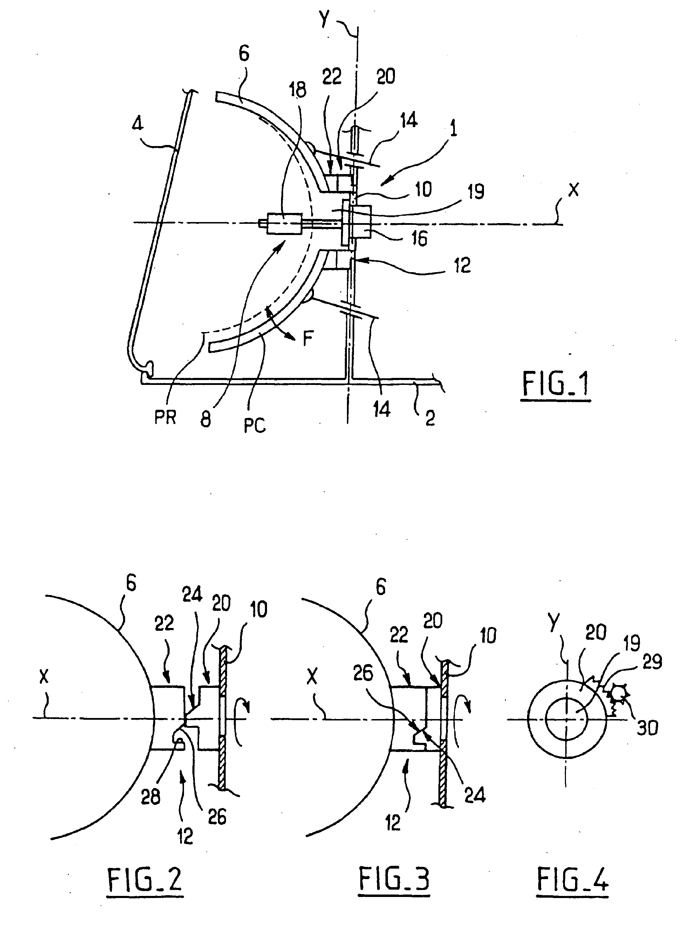

Un exemple de projecteur 1 conforme à la présente invention est représenté schématiquement sur la figure 1.

Ce projecteur 1 comprend un boîtier 2, une glace 4, un réflecteur 6, une source lumineuse 8, une platine fixe 10. De façon classique, le boîtier 2 est fermé à l'avant, par rapport à la direction d'éclairage, par la glace 4. Le boîtier 2 abrite la source lumineuse 8 comportant un support de lampe 16 et une lampe 18, ainsi que le réflecteur 6.

Selon ce mode de réalisation de l'invention, le réflecteur 6 est mobile par rapport à la source lumineuse 8.

Le projecteur 1 comprend en outre une came 12 pour déplacer le réflecteur 6 par rapport à la source lumineuse 8, ainsi que des guides 14 pour le maintien du réflecteur 6 et le guidage de son déplacement.

Le réflecteur 6 est globalement orienté pour permettre un éclairage par le projecteur 1 selon une direction générale suivant un axe X horizontal. Le réflecteur 6 est situé entre la glace 4 et la platine fixe 10.

Le réflecteur 6 est pourvu d'un trou pour le passage de la lampe 18. La lampe 18 est sensiblement placée au niveau du foyer du réflecteur 6.

La came 12 permet de déplacer le réflecteur 6, par rapport à la source lumineuse 8, d'une position code PC à une position route PR ou inversement. La position code PC correspond à un éclairage par le projecteur 1 avec un faisceau de croisement. La position de route PR correspond à un éclairage par le projecteur 1 avec un faisceau de route.

Le déplacement de la position code PC à la position route PR est représenté sur la figure 1 par la flèche F. Le décalage entre la position code PC et la position route PR a été exagéré sur la figure 1 par souci de clarté. Typiquement, un faisceau de route de photométrie satisfaisante est obtenu en déplaçant le réflecteur vers l'avant sur une distance de l'ordre de 2 millimètres.

Le passage de la position code PC à la position route PR est assuré ;
- d'une part en effectuant une translation, suivant un premier mouvement de translation, de l'ordre de 2 mm du réflecteur 6 par rapport à la platine fixe 10 selon l'axe de projection X, et
- d'autre part une translation verticale, suivant un deuxième mouvement de translation, de 1 mm environ vers le haut, selon un axe Y.

La translation selon la direction X indiquée ci-dessus, permet une défocalisation de la source lumineuse 8 par rapport au réflecteur 6. Ceci a pour effet principal d'atténuer très sensiblement la coupure nette obtenue dans la position PC du réflecteur 6, et d'assurer une distribution homogène de la lumière dans une bande horizontale étendue mais relativement peu épaisse. La répartition lumineuse et le contour du faisceau lumineux de croisement correspondent à un faisceau de croisement européen normalisé. Dans la position code PC, le faisceau est coupé à la hauteur imposée par la réglementation. Le mouvement de translation verticale permet quant à lui de relever l'ensemble de la lumière ainsi répartie, pour que le faisceau de route soit émis à la hauteur convenable par rapport à la route.

La came 12 comporte une première pièce 20 et une deuxième pièce 22.

Les figures 2, 3 et 4 illustrent schématiquement le fonctionnement de la came 12. Sur les figures 2 et 3 sont représentés le réflecteur 6, la came 12, avec ses première 20 et deuxième 22 pièces, et la platine fixe 10. La deuxième pièce 22 est rigidement solidaire du réflecteur 6. La première pièce 20 est mobile en rotation par rapport à la platine fixe 10, autour de l'axe X. Les première 20 et deuxième pièces 22 sont chacune formées d'une rondelle dont la zone centrale évidée constitue un passage 19 pour la lampe 18.

Chaque rondelle comporte deux faces principales sensiblement perpendiculaires à l'axe X. Une première face principale de la première pièce 20 est au contact de la platine fixe 10. La deuxième face principale de la première pièce 20 est orientée colinéairement à l'axe X dans la direction de projection d'éclairage. Cette deuxième face est munie d'une première rampe 24. Cette première rampe 24 forme un arc de cercle autour du passage 19.

Cette piste s'écarte d'un plan perpendiculaire à l'axe X, dans le sens des aiguilles d'une montre, lorsque l'on regarde la deuxième face principale.

L'une des deux faces principales de la rondelle constitutive de la deuxième pièce 22 est solidaire du réflecteur 6. L'autre face principale est munie d'une deuxième rampe 26. Cette deuxième rampe 26 forme une piste en arc de cercle autour du passage 19. Cette dernière piste s'écarte d'un plan perpendiculaire à l'axe X, dans le sens des aiguilles d'une montre lorsque l'on regarde la face comportant la deuxième rampe 26.

Les pistes respectives des première 24 et deuxième 26 rampes sont en appui l'une sur l'autre et sont aptes à glisser l'une sur l'autre. Ainsi, comme représenté sur la figure 2, lorsque la première pièce 20 tourne autour de l'axe X, dans le sens inverse des aiguilles d'une montre (lorsque l'on regarde la face de la première pièce 20 comportant la première rampe 24), par rapport à la deuxième pièce 22, la première pièce 20 déplace la deuxième pièce 22 dans un mouvement de translation suivant l'axe X, en l'écartant de la première pièce 20.

Inversement, comme représenté sur la figure 3, lorsque la première pièce 20 tourne autour de l'axe X, dans le sens des aiguilles d'une montre (lorsque l'on regarde la face de la première pièce 20 comportant la première rampe 24), par rapport à la deuxième pièce 22, la première 20 et la deuxième 22 pièces se rapprochent l'une de l'autre. La deuxième pièce 22 est munie d'une butée 28 pour bloquer la rotation de la première pièce 20 dans ce sens.

Comme représenté sur la figure 4, la première pièce 20 comporte, en périphérie de la rondelle qui la constitue, un secteur denté 29, en arc de cercle, les dents du secteur denté 29 s'étendant radialement. Ces dents sont aptes à coopérer avec une roue dentée 30 solidaire d'un micromoteur 33 (non représenté sur la figure 4).

Ainsi, le micromoteur 33 entraîne la première pièce 20 en rotation autour de l'axe X.

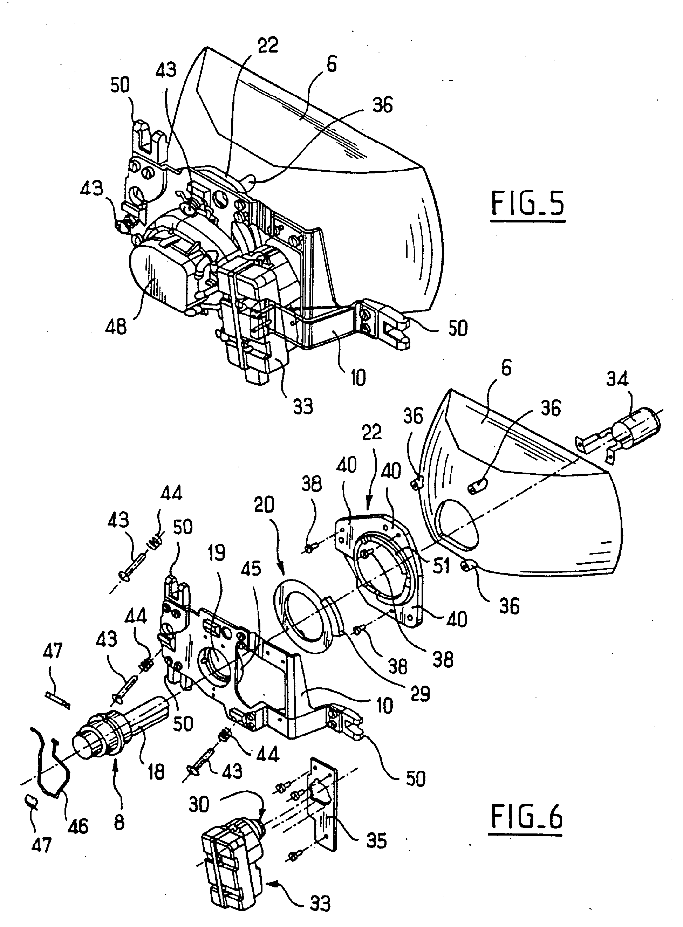

Les figures 5 et 6 représentent un exemple de projecteur conforme à la présente invention respectivement, en perspective, tel qu'il est lorsque les pièces qui le constituent sont assemblées, et en perspective éclatée.

Comme représenté sur la figure 6, dans ce type de projecteur 1, sont emboîtés successivement selon l'axe X, dans la direction de projection des faisceaux engendrés par ce projecteur 1, une lampe 18, une platine fixe 10, une première pièce 20, une deuxième pièce 22, un réflecteur 6 et un occulteur 34. Le réflecteur 6 comporte trois pattes 36 sur lesquelles sont vissées trois vis 30 pour maintenir la deuxième pièce 22 rigidement liée au réflecteur 6. La deuxième pièce 22 comporte trois oreilles 40. Chacune de ces oreilles 40 est percée de deux trous 41, 42. L'un, le trou 41, permet de passer une vis 38 de fixation de la deuxième pièce 22 sur le réflecteur 6. L'autre, le trou 42, permet de maintenir le réflecteur 6 sur la platine fixe 10 grâce à des tiges filetées 43 et des ressorts 44. Les tiges filetées 43 et les ressorts 44 autorisent un déplacement, à la fois selon l'axe X et dans un plan perpendiculaire à l'axe X, du réflecteur 6 par rapport à la platine fixe 10, entre deux positions correspondant respectivement aux positions code PC et route PR.

Les ressorts 44 servent au rappel du projecteur de la position route PR vers la position code PC.

La platine fixe 10 comporte un élément en saillie 45 cylindrique de révolution autour du passage 19, s'étendant dans la direction de projection des faisceaux engendrés par le projecteur 1. La première pièce 20 est enfilée sur cet élément en saillie 45. Ce dernier permet un guidage de la rotation de la première pièce 20 autour de l'axe X.

Les première 20 et deuxième 22 pièces comportent chacune trois rampes. Chaque rampe de chaque première 20 ou deuxième 22 pièce est apte à coopérer avec une rampe de l'autre pièce 20 ou 22.

Chaque rampe s'élève de la rondelle constitutive de chaque première 20 ou deuxième 22 pièce, vers un méplat 51, lorsque l'on tourne dans le sens des aiguilles d'une montre, autour de l'axe X, en étant face à la surface de cette rondelle qui comporte les rampes. La surface du méplat 51 est perpendiculaire à l'axe X. Ainsi, le déplacement du projecteur 1 par rapport à la source lumineuse 8, selon le premier mouvement de translation s'arrête grâce au méplat 51 et non pas grâce à une butée. Ceci permet de limiter les bruits de chocs, de prolonger la durée de vie des filaments lorsque la lampe 18 est une lampe à incandescence et d'éviter les phénomènes transitoires gênant pour l'utilisateur lorsque la lampe 18 est une lampe à décharge.

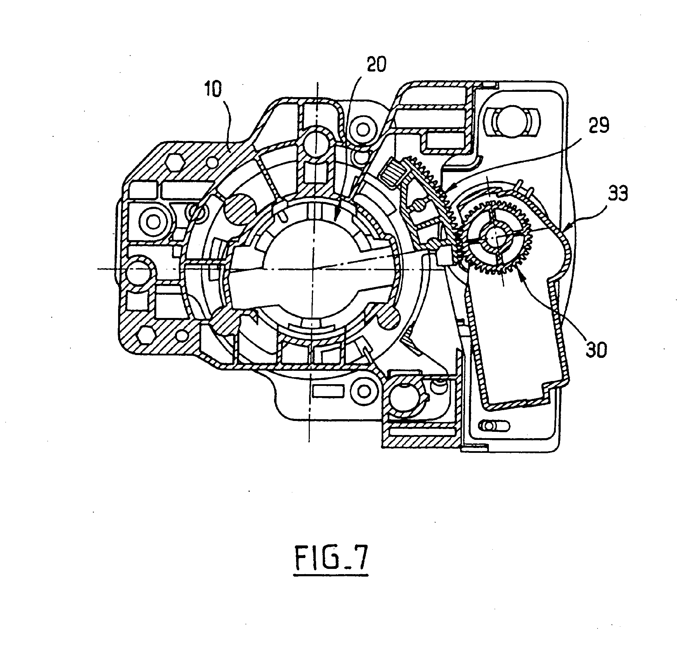

Le micromoteur 33 est fixé sur un support 35, lui-même fixé sur la platine fixe 10. Ce support 35 et la platine fixe 10 comportent une découpe dans laquelle est passée la roue dentée 30 pour venir coopérer avec le secteur denté 29, comme représenté sur la figure 7.

Le micromoteur 33 est alimenté et commandé par les tensions disponibles, sur les faisceaux électriques code et route du véhicule automobile, sans aucune modification de câblage utilisé pour un projecteur conventionnel.

Comme représenté sur la figure 6, la lampe 18 est maintenue sur la platine fixe grâce à un clip 46, lui-même fixé sur cette platine fixe 10 par des languettes 47.

Comme représenté sur la figure 5, la lampe 18 est connectée au circuit d'alimentation électrique du véhicule automobile grâce à un connecteur 48.

Le projecteur est monté sur le châssis du véhicule automobile grâce à des pattes de fixation 50 vissées sur la platine fixe 10.

On a décrit ci-dessus un projecteur 1 dans lequel le réflecteur 6 est mobile par rapport à une lampe 18 rigidement solidaire de la platine fixe 10 et donc du reste du châssis du véhicule automobile, mais selon une autre variante de l'invention, le réflecteur 6 est fixe par rapport au châssis du véhicule automobile alors que la lampe 18 est mobile par rapport au réflecteur 6.

Selon encore une autre variante de l'invention, les première 24 et deuxième 26 rampes peuvent être remplacées par des éléments filetés coopérant l'un avec l'autre.

Avantageusement, dans ce cas, les filetages ont un jeu suffisant entre eux pour permettre un déplacement dans un plan perpendiculaire à l'axe de vissage et dévissage des filetages l'un dans l'autre.

Il a été décrit ci-dessus une variante du projecteur selon l'invention permettant, avec une seule source lumineuse, de produire un faisceau de route ou un faisceau de croisement. Mais selon d'autres variantes, le projecteur permet, avec une seule source lumineuse, de produire un faisceau anti-brouillard ou un faisceau de route ou de longue portée.

## Revendications

1. Projecteur de véhicule muni d'une came (12) pour déplacer un réflecteur (6) et une source lumineuse (8) l'un par rapport à l'autre, pour engendrer deux faisceaux lumineux différents, cette came (12) comportant une première (20) et une deuxième (22) pièces et transformant un mouvement de rotation de la première pièce (20) autour d'un axe de rotation (X), en un premier mouvement de translation de la deuxième pièce (22), **caractérisé par le fait que** le premier mouvement de translation est réalisé colinéairement à l'axe de rotation (X).

2. Projecteur selon la revendication 1, **caractérisé par le fait que** les première (20) et deuxième (22) pièces sont aptes à un deuxième mouvement de translation, l'une par rapport à l'autre, dans un plan perpendiculaire à l'axe de rotation (X).

3. Projecteur selon l'une des revendications précédentes, **caractérisé par le fait que** la première pièce (20), au cours de sa rotation par rapport à la deuxième pièce (22), est apte à pousser la deuxième pièce (22) parallèlement à l'axe de rotation (X).

4. Projecteur selon l'une des revendications précédentes, **caractérisé par le fait qu'**au moins l'une des première (20) et deuxième (22) pièces est munie d'une rampe (24, 26) présentant une surface s'écartant d'un plan perpendiculaire à l'axe de rotation (X), selon une trajectoire décrivant un arc de cercle autour de cet axe (X).

5. Projecteur selon l'une des revendications précédentes, **caractérisé par le fait que** les première (20) et deuxième (22) pièces comportent un passage pour une lampe (18) ou un support de lampe (16).

6. Projecteur selon l'une des revendications précédentes, **caractérisé par le fait que**, lorsque le projecteur (1) est monté sur le véhicule, le premier mouvement de translation s'effectue selon un axe horizontal (X).

7. Projecteur selon l'une des revendications 2 à 7, **caractérisé par le fait que**, lorsque le projecteur (1) est monté sur le véhicule, le deuxième mouvement de translation s'effectue selon un axe vertical (Y).

8. Projecteur selon l'une des revendications précédentes **caractérisé par le fait que** le déplacement du réflecteur (6) et de la source lumineuse (8) l'un par rapport à l'autre permet un passage d'un éclairage par le projecteur (1) avec un faisceau de route à un éclairage par le projecteur (1) avec un faisceau de croisement ou inversement.

9. Projecteur selon l'une des revendications précédentes, **caractérisé par le fait que** l'une des première (20) et deuxième (22) pièces est munie d'un secteur denté (29) pour être entraînée en rotation autour de l'axe de rotation (X), par un micromoteur (33).

10. Projecteur selon la revendication 9, **caractérisé par le fait que** le micromoteur (33) alimenté et commandé par les tensions disponibles sur les faisceaux électriques pour les éclairages de croisement et de route du véhicule.

## Claims

1. Vehicle headlight provided with a cam (12) for moving a reflector (6) and a light source (8) with respect to each other for generating two different light beams, this cam (12) comprising first (20) and second (22) pieces and converting a rotation movement of the first piece (20) about a rotation axis (X) into a first translation movement of the second piece (22), **characterised by** the fact that the first translation movement is effected colinearly with the rotation axis (X).

2. Headlight according to claim 1, **characterised by** the fact that the first (20) and second (22) pieces are able to make a second translation movement, with respect to each other, in a plane perpendicular to the rotation axis (X) .

3. Headlight according to one of the preceding claims, **characterised by** the fact that the first piece (20), in the course of its rotation with respect to the second piece (22), is able to push the second piece (22) parallel to the rotation axis (X).

4. Headlight according to one of the preceding claims, **characterised by** the fact that at least one of the first (20) and second (22) pieces is provided with a ramp (24, 26) having a surface moving away from a plane perpendicular to the rotation axis (X) along a path describing an arc of circle about this axis (X).

5. Headlight according to one of the preceding claims, **characterised by** the fact that the first (20) and second (22) pieces comprise a passage for a lamp (18) or a lamp support (16).

6. Headlight according to one of the preceding claims, **characterised by** the fact that, when the headlight (1) is mounted on the vehicle, the first translation movement takes place along a horizontal axis (X).

7. Headlight according to one of claims 2 to 7, **characterised by** the fact that, when the headlight (1) is mounted on the vehicle, the second translation movement takes place along a vertical axis (Y).

8. Headlight according to one of the preceding claims, **characterised by** the fact that the movement of the reflector (6) and light source (8) with respect to each other allows a change from lighting by the headlight (1) with a main beam (2) to lighting by the headlight (1) with a dipped beam or vice versa.

9. Headlight according to one of the preceding claims, **characterised by** the fact that one of the first (20) and second (22) pieces is provided with a toothed sector (29) in order to be driven in rotation about the rotation axis (X) by a micromotor (33).

10. Headlight according to claim 9, **characterised by** the fact that the micromotor (33) is supplied and controlled by the voltages available on the electrical harnesses for the dipped and main beam lighting of the vehicle.

## Patentansprüche

1. Kraftfahrzeugscheinwerfer, versehen mit einem Nocken (12), um einen Reflektor (6) und eine Lichtquelle (8) bezüglich einander zu verlagern, um zwei verschiedene Lichtbündel zu erzeugen, wobei der Nocken (12) ein erstes (20) und ein zweites (22) Teil umfasst und eine Drehbewegung des ersten Teils (20) um eine Drehachse (X) in eine erste Translationsbewegung des zweiten Teils (22) umwandelt, **dadurch gekennzeichnet, dass** die erste Translationsbewegung kolinear zur Drehachse (X) erfolgt.

2. Scheinwerfer nach Anspruch 1,
**dadurch gekennzeichnet, dass** das erste (20) und das zweite (22) Teil bezüglich einander eine zweite Translationsbewegung in einer Ebene senkrecht zur Drehachse (X) auszuführen vermögen.

3. Scheinwerfer nach einem der vorhergehenden Ansprüche,
**dadurch gekennzeichnet, dass** das erste Teil (20) bei seiner Drehung bezüglich des zweiten Teils (22) das zweite Teil (22) parallel zur Drehachse (X) zu schieben vermag.

4. Scheinwerfer nach einem der vorhergehenden Ansprüche,
**dadurch gekennzeichnet, dass** von dem ersten (20) und zweiten (22) Teil wenigstens eines mit einer Rampe (24, 26) versehen ist, die eine Oberfläche aufweist, welche sich von einer zur Drehachse (X) senkrechten Ebene in einer einen Kreisbogen um diese Achse (X) herum beschreibenden Bahn entfernt.

5. Scheinwerfer nach einem der vorhergehenden Ansprüche,
**dadurch gekennzeichnet, dass** das erste (20) und das zweite (22) Teil einen Durchlass für eine Lampe (18) oder einen Lampenhalter (16) aufweisen.

6. Scheinwerfer nach einem der vorhergehenden Ansprüche,
**dadurch gekennzeichnet, dass** die erste Translationsbewegung, wenn der Scheinwerfer (1) am Fahrzeug montiert ist, entlang einer horizontalen Achse (X) erfolgt.

7. Scheinwerfer nach einem der Ansprüche 2 bis 7,
**dadurch gekennzeichnet, dass** die zweite Translationsbewegung, wenn der Scheinwerfer (1) am Fahrzeug montiert ist, entlang einer vertikalen Achse (Y) erfolgt.

8. Scheinwerfer nach einem der vorhergehenden Ansprüche,
**dadurch gekennzeichnet, dass** die Verlagerung des Reflektors (6) und der Lichtquelle (8) bezüglich einander einen Wechsel von einer Beleuchtung mit Fernlicht durch den Scheinwerfer (1) zu einer Beleuchtung mit Abblendlicht durch den Scheinwerfer (1) und umgekehrt ermöglicht.

9. Scheinwerfer nach einem der vorhergehenden Ansprüche,
**dadurch gekennzeichnet, dass** von dem ersten (20) und zweiten (22) Teil eines mit einem Zahnsegment (29) versehen ist, um durch einen Kleinstmotor (33) um die Drehachse (X) herum in Drehung versetzt zu werden.

10. Scheinwerfer nach Anspruch 9,
**dadurch gekennzeichnet, dass** der Kleinstmotor (33) durch die Spannungen gespeist und gesteuert wird, die in den Leitungsbündeln für Abblendlicht und Fernlicht des Fahrzeugs verfügbar sind.
